# NEUE EUROPÄISCHE PATENTSCHRIFT

(11) **EP 2 455 244 B2**
(45) Veröffentlichungstag und Bekanntmachung des Hinweises auf die Entscheidung über den Einspruch: **02.08.2017**
(45) Hinweis auf die Patenterteilung: 05.03.2014
(21) Anmeldenummer: 11188043.1
(22) Anmeldetag: 07.11.2011
(51) Int. Cl.: B60G 7/00

(54) **Verfahren zur Herstellung eines Lenkerarms und Lenkerarm**
Method for manufacturing a control arm and control arm
Procédé de fabrication d'un bras de suspension et bras de suspension

(30) Priorität: 19.11.2010 DE 102010051741
(43) Veröffentlichungstag der Anmeldung: 23.05.2012
(73) Patentinhaber: Benteler Automobiltechnik GmbH, 33102 Paderborn (DE)
(72) Erfinder: Mielke, Oliver, 33184 Altenbeken (DE); Pedersen, Roald, 2818 Gjovik (NO); Koch, Uwe, 33758 Schloss Holte (DE)
(74) Vertreter: Ksoll, Peter

(56) Entgegenhaltungen:
- EP-A1- 1 642 754
- WO-A1-95/13931
- DE-A1-102008 047 015
- DE-T5-112005 002 470
- Khajehgani, Ali: Videreutvikling av bakre hjuloppheng til Hyundai Opirus. Veröffentlichte Bachelorarbeit, Gjøvik 2009. Ein Auszug aus dem Bibliothekssystem der Universität Gjøvik zum Nachweis der öffentlichen Zugänglichkeit als Dokument D1.1 Eine Übersetzung der D1 vom Norwegischen ins Deutsche als D1.2.
- Die in einem öffentlichen Vortrag gezeigten Präsentationsunterlagen, der am 04 Juni 2009 anlässlich der Präsentation der Abchlussarbeit (D1) von Herrn Ali Khajehgani an der Universität von Gjøvik in Norwegen gehalten wurde

## Beschreibung

Die vorliegende Erfindung betrifft ein Verfahren zur Herstellung eines Lenkerarms zur Anordnung an einer Kraftfahrzeugachse gemäß den Merkmalen im Oberbegriff von Patentanspruch 1.

Die vorliegende Erfindung betrifft weiterhin einen Lenkerarm zur Anordnung an einer Kraftfahrzeugachse gemäß den Merkmalen im Oberbegriff von Patentanspruch 10.

Achskomponenten in Form von Spurstangen, Lenkern oder Koppelstäben dienen der Übertragung von statischen und dynamischen Radkräften an einen Achshilfsrahmen bzw. an eine Kraftfahrzeugkarosserie. Sie sind dabei zwischen Radträgern und fahrzeugseitigen Aufnahmepunkten drehbar und/oder schwenkbar gekoppelt. Die Koppelung erfolgt meist über Gummimetalllager.

Die zu übertragenden Radkräfte haben dabei Spitzenbereich von bis zu mehreren tausend Newton, weshalb die Radführungslenker hohen und starken Spitzenbelastungen sowie Dauerschwingbelastungen standhalten müssen. Durch verschiedene Fahreinflüsse, beispielsweise unebene Fahrbahnen oder aber auch Umwuchten an einem Fahrzeugrad sind die Radführungslenker zusätzlich starken Schwingungen ausgesetzt.

Aufgrund von dynamischen Fahrprofilanforderungen an heutige Kraftfahrzeuge ist es hier insbesondere wichtig, auf Seiten der ungefederten Radmassen, besonders leichte Bauteile einzusetzen. Weiterhin besteht die ständige Forderung der Kraftfahrzeughersteller, das Gesamtkraftfahrzeuggewicht zur Reduzierung des Kraftstoffverbrauches und des CO2-Austoßes zu reduzieren.

Das Dokument EP 1 642 754 A1 wird als nächstliegender Stand der Technik angesehen.

Aus dem Stand der Technik bekannte Lenker sind meist als Stahlbauteile konstruiert, da sie so den Anforderungen von geringem Gewicht, hoher Steifigkeit, hoher Lebensdauer und günstiger Produzierbarkeit gerecht werden. Beispielsweise bestehen aus Stahl gebaute mehrteilige Lenker zumeist aus einer Ober-und einer Unterschale, an die verschiedene Lageraufnahmen, Federaufnahmen oder aber Dämpferaufnahmen angebunden werden. Meist erfolgt die Komplettierung eines solchen Lenkers durch schweißtechnisches Verbinden. Hierzu sind eine Vielzahl von Arbeitsschritten sowie eine ausgiebige Antikorrosionsnachbehandlung notwendig, um ein langlebiges und robustes Bauteil zu schaffen. Beispielsweise ist ein solches Bauteil aus der EP 133 65 14 A2 bekannt.

Nachteilig bei Schweißkonstruktionen ist grundsätzlich eine Veränderung des Härtegefüges im Bereich der Schweißnaht und der die Schweißnaht umgebenden Wärmeeinflusszone. Gerade bei geometrisch komplex ausgebildeten Bauteilen ist ein sauberes Schweißergebnis oft nur schwer erzielbar. Ebenfalls nachteilig bei einer Stahl-Schweißkonstruktion ist die damit einhergehende Anfälligkeit gegenüber Korrosion. Die Schweißnähte erhöhen durch die Koppelung der verschiedenen Bauteilkomponenten zu einem Lenker zwar die Steifigkeit, durch Schweißzusatzwerkstoffe jedoch auch das Bauteilgewicht selber.

Eine weitere Möglichkeit zur kostengünstigen Herstellung von Lenkern ist das Herstellen durch Urformen, beispielsweise durch Gießen. Hierbei können Lenker, beispielsweise in X-förmiger Bauart geformt werden. Durch das Gießen selber sind geometrisch komplexe Formgebungen möglich, die einer Stahl-Schweißkonstruktion verwehrt bleiben. Beispielsweise werden Lenker als Aluminium hohlbauteile gießtechnisch hergestellt. Für den Hohlraum werden meist verlorene Kerne, beispielsweise Sandkerne oder Ähnliches eingesetzt. Nachteilig bei gusstechnisch hergestellten Lenkern, insbesondere als Hohlbauteil, ist eine hohe Produktionstoleranz. Zur Abstützung von in den Gussbauteilen eingeschlossenen Kernen ist es unter Umständen notwendig, dass Außenseiten offen bleiben, worunter wiederum die Torsionssteifigkeit solcher Profilbauteile leidet.

Ein weiterer Nachteil von Gussbauteilen ist eine hohe Porösität des Bauteils selber. Hierdurch ist eine geringere Festigkeit gegenüber beispielsweise umformtechnisch bearbeiteten Bauteilen gegeben. Meist wird zur Erhöhung der Festigkeit von Gussbauteilen ein nachgelagerter Schmiedeprozess eingesetzt. Mit dem Schmiedeprozess selbst steigen jedoch wiederum die Produktionskosten des Bauteils, bei gleichzeitiger Verringerung der Produktionsfreiheitsgerade.

Weiterhin ist aus der DE 10 2008 047 015 A1 ein Verfahren zum Herstellen eines Lenkerarms unter Verwendung eines Strangpressprozesses mit variabler Krümmung bekannt. Hierbei wird ein Lenkerarm aus einem Leichtmetall direkt durch den Strangpressprozess in seine Endkonfiguration gebracht. Das bereits durch den Strangpressprozess gekrümmt gefertigte Halbzeug wird in anschließenden Weiterverarbeitungsprozessen bearbeitet und montiert. Dieses Verfahren erfordert jedoch eine aufwendige Regelung und Steuerung des Strangpressprozesses.

Aufgabe der vorliegenden Erfindung ist es daher, ausgehend vom Stand der Technik, ein Verfahren zur Herstellung eines Lenkerarms sowie einen Lenkerarm aufzuzeigen, welche gegenüber den aus dem Stand der Technik bekannten Herstellungsverfahren günstiger produzierbar sind, bei gleichzeitiger hoher Steifigkeit des Lenkerarms und besonders guter Maßhaltigkeit.

Die zuvor genannte Aufgabe wird erfindungsgemäß mit einem Verfahren zur Herstellung eines Lenkerarms zur Anordnung an einer Kraftfahrzeugachse mit den Merkmalen im Patentanspruch 1 gelöst. Der gegenständliche Teil der Aufgabe wird mit einem Lenkerarm zur Anordnung an einer Kraftfahrzeugachse gemäß den Merkmalen im Patentanspruch 10 gelöst.

Vorteilhafte Ausführungsvarianten der vorliegenden Erfindung sind Bestandteil der abhängigen Patentansprüche.

Das erfindungsgemäße Verfahren zur Herstellung eines Lenkerarms zur Anordnung an einer Kraftfahrzeugachse ermöglicht es, einen Lenkerarm als einstückiges Umformbauteil aus einem Leichtmetallstrangpressprofil herzustellen. Es ist dadurch gekennzeichnet, dass folgende Verfahrensschritte ausgeführt werden:
- Bereitstellen eines Halbzeuges aus einem Leichtmetallstrangpressprofil, welches eine Pi-förmige Querschnittskonfiguration mit einem Bodensteg und sich von dem Bodensteg erstreckenden Seitenstegen und gegenüber den Stegen abstehende Schenkeln besitzt,
- Schneidetechnisches Bearbeiten des Halbzeuges,
- Einbringen von Lageraufnahmeöffnungen,
- Abschnittsweises Aufweiten des Querschnitts des bearbeiteten Halbzeuges.

Das im Querschnitt Pi-förmig konfigurierte Leichtmetallstrangpressprofil weist einen Aufbau analog dem griechischen Buchstaben Pi in Großschreibweise auf. Es ist also zu allen Seiten offen und hat jeweilige Stege und Schenkel, die das Widerstandsmoment gegenüber Biegung in der jeweiligen Orientierungsrichtung der Stege oder Schenkel erhöhen. Durch die allseitige Offenheit des Profils selber besteht eine besonders gute Bearbeitungsmöglichkeit, bedingt durch nur gering einzusetzende Umformkräfte sowie gute Deformierbarkeit des Profils.

Es ist weiterhin durch die geometrische Auslegung des Profils sehr gut möglich, aus mehreren Positionen Umformwerkzeuge an dem Profil anzusetzen bzw. in das Profil einzuführen. Insgesamt ergibt sich somit durch das erfindungsgemäße Verfahren eine besonders kostengünstige Herstellmöglichkeit, da die Werkzeuge in verschiedenen Ansatzpositionen in das Werkstück einführbar sind. Gleichzeitig haben die Werkzeuge bei der Durchführung des Verfahrens aufgrund der Offenheit des im Querschnitt Pi-förmigen Profils die Möglichkeit, in gute Kraftangriffspositionen bringbar zu sein. Hierdurch steigt die Produktionsgenauigkeit bei dem Lenkerarm, der mit dem erfindungsgemäßen Verfahren hergestellt wird.

Besonders vorteilig ist, dass die Variationsmöglichkeiten bei der Durchführung des erfindungsgemäßen Verfahrens sehr vielfältig sind. Die Wandstärken des Profils können dabei den Anforderungen angepasst werden. Das heißt, über ihren Verlauf können sie verschiedene Dicken, Dickensprünge oder Dicken-übergänge aufweisen, sodass sie die jeweiligen Widerstandsmomente gegen Biegung oder Torsion optimal erfüllen. Durch den Einsatz von industriell üblichen Formungs- und Fertigungsmethoden, beispielsweise Biegen, Schneiden, Stanzen oder Ähnlichen wird der Lenker in seine Endform gebracht.

Der erfindungsgemäß besonders bevorzugte vorteilige Verfahrensschritt des abschnittsweisen Aufweitens kann insbesondere durch Spreizen oder Expandieren des Profils in einzelnen Bereichen hergestellt werden. Das eingesetzte Halbzeug wird besonders bevorzugt stranggepresst und danach abgeschreckt, gestreckt und in einzelne Abschnitte abgetrennt.

In einer vorteilhaften Ausführungsvariante des erfindungsgemäßen Verfahrens werden die Seitenstege und/oder Schenkel zumindest abschnittsweise schneidetechnisch bearbeitet. Vorzugsweise erfolgt die schneidetechnische Bearbeitung durch Stanzen. Hierdurch ist es möglich, dass im Querschnitt Pi-förmig konfigurierte Profil des Halbzeuges durch einen insbesondere Stanzprozess derartig vorzubereiten, dass nachfolgende Umformungsoperationen leicht ausgeführt werden. Das stanztechnische Bearbeiten ermöglicht es somit auch den Bodensteg derart vorzubereiten, dass Öffnungen in den Bodensteg eingestanzt werden, bei gleichzeitigem Abschneiden der Seitenstege. Das Halbzeug wird somit optimal auf die zur Verfügung stehende geforderte kinematische Bewegungsfreiheit des erfindungsgemäß herzustellenden Lenkerarms vorbereitet.

In einer weiteren bevorzugten Ausführungsvariante wird mindestens ein Endabschnitt des Halbzeuges umformtechnisch bearbeitet. Hierunter ist zum einen zu verstehen, dass der Endabschnitt selber mit Aufnahmen für beispielsweise Gummimetalllager oder sonstige Anbindungslagerpunkte vorbereitet ist, die wiederum durch umformtechnisches Bearbeiten für die Aufnahme eines Lagerpunktes vorbereitet werden oder aber in eine Lageraufnahmegeometrie gebogen werden. Beispielsweise können durch das umformtechnische Bearbeiten die Schenkel zusammengebogen werden oder aber Durchzüge in Lageraufnahmepunkten vorbereitet werden.

Besonders bevorzugt wird ein Endabschnitt des Halbzeuges zumindest abschnittsweise durch Streckbiegen umgeformt, vorzugsweise wird der Endabschnitt in Richtung des Bodensteges gebogen. Durch das Streckbiegen, vorzugsweise in Richtung des Bodensteges, wird das Pi-förmige Profil optimal ausgenutzt. Eine Materialüberbeanspruchung, gerade im Bereich des Bodensteges oder der Seitenstege, wird vermieden, da die Biegeachse im Wesentlichen quer zur Längsrichtung des Halbzeuges verläuft und somit um den Bodensteg gebogen wird. In der Folge weiten sich hauptsächlich die dem Bodensteg beabstandeten Abschnitte der jeweiligen Schenkel. Der herzustellende Lenkerarm kann aufgrund des Querschnittsprofils somit optimal unter Einsatz niedriger Umformkräfte, bei gleichzeitig geringem Spannungsaufbau innerhalb des Bauteils, umformtechnisch derart bearbeitet werden, dass er später optimal den zur Verfügung stehenden Bauraum ausnutzt.

Weiterhin besonders bevorzugt werden Lageraufnahmeöffnungen durch Stanzen in den Bodensteg und/oder die Schenkel und/oder die Seitenstege eingebracht. Hierdurch ist ein Einbringen verschiedenster Öffnungen mittels nur eines Arbeitsschrittes möglich. Eine entsprechende Stanze kann beispielsweise im Bereich des Bodensteges in einer Bewegungsrichtung von oben, im Falle der Schenkel in einer Bewegungsrichtung von der Seite ausgeführt werden.

Weiterhin werden besonders bevorzugt die Lageraufnahmeöffnungen nachbearbeitet, insbesondere durch umformtechnisches Bearbeiten, besonders bevorzugt durch Aufweiten. Hierdurch wird eine kraftaufnahmeoptimierte Konfiguration der Lageraufnahmeöffnungen geschaffen. Eine ausgestanzte Voröffnung für ein Lagerauge wird somit durch Aufweiten in die Endkonfiguration gebracht. Das Profil besitzt durch den Aufweitprozess selber ein höheres Materialaufkommen, gegenüber einem Verfahren, bei dem das Lagerauge direkt in Endkonfiguration ausgestanzt wird. Unter Materialaufkommen ist hier eine bessere Materialausnutzung bzw. eine Materialersparnis zu verstehen. In der Folge stellt sich eine kraftoptimierte Geometrie ein, da mehr Material zur Kraftaufnahme und Weiterleitung vorhanden ist.

Weiterhin werden besonders bevorzugt die Schenkel und/oder die Seitenstege zumindest abschnittsweise in Längsrichtung des herzustellenden Lenkerarms umgeformt, vorzugsweise werden die gegenüberliegenden Schenkel über die Seitenstege in dem Endabschnitt zueinander orientiert umgeformt. Hierdurch ergibt sich eine optimale Geometrie im Bereich der Anbindung des herzustellenden Lenkerarmes an einen Achshilfrahmen, einen Radträger oder aber an eine Kraftfahrzeugkarosserie, ohne Einbußen auf die Festigkeit.

Weiterhin besonders bevorzugt können beispielsweise Dämpferaufnahmen, Federaufnahmen oder sonstige Aufnahmepunkte oder aber ein Mittelabschnitt derart aufgeweitet werden, dass sich die Biegesteifigkeit und/oder Torsionssteifigkeit des herzustellenden Lenkerarms erhöht. Hierzu werden besonders bevorzugt der Querschnittsverlauf des Halbzeuges durch Aufweiten der Schenkel und/oder Seitenstege zumindest abschnittsweise expandiert.

Insbesondere können mit dem erfindungsgemäßen Verfahren auf einem Werkzeug zwei Lenkerarme gleichzeitig hergestellt werden, die während oder nach der Herstellung getrennt werden. Hierunter ist im Rahmen der Erfindung zu verstehen, dass während der Herstellung zwei Halbzeuge und/oder bearbeitete Halbzeuge getrennt werden. Es besteht auch die Möglichkeit, zunächst den Umform- und Herstellungsvorgang vollends abzuschließen und dann zwei fertig hergestellte Lenkerarme zu trennen. Insbesondere ergibt sich hierdurch der Vorteil, dass die Taktzeit zur Herstellung eines erfindungsgemäßen Lenkerarmes halbiert wird und die Modifikationskosten bzw. die Herstellungskosten eines Werkzeuges zur Herstellung von zwei Lenkerarmen gleichzeitig deutlich geringer gegenüber beispielsweise zwei getrennt voneinander herzustellenden Werkzeugen ausgelegt werden.

Die vorliegende Erfindung betrifft weiterhin einen Lenkerarm zur Anordnung an einer Kraftfahrzeugachse, wobei der Lenkerarm zumindest abschnittsweise im Querschnitt eine Pi-förmige Konfiguration mit einem Bodensteg und sich in Verlängerung der Bodenstege erstreckenden Seitenstege und gegenüber den Stegen abstehenden Schenkeln aufweist und nach einem Verfahren mit den Merkmalen mindestens einer der Patentansprüche 1 bis 9 hergestellt ist. Der erfindungsgemäße Lenkerarm weist einen Querschnittsverlauf auf, der zumindest abschnittsweise aufgeweitet ist.

Die Aufweitung über den Querschnittsverlauf ist im Rahmen der Erfindung insbesondere durch ein Aufweiten des Pi-förmig querschnittskonfiguriertem Profils im Bereich der Schenkel zu verstehen. Die Schenkel sind somit derart umgeformt, dass sie voneinander wegbewegt wurden und eine Aufweitung des Profils in einem Abschnitt bilden. Das Aufweiten bildet hierbei eine extreme Materialersparnis, wiederum gefolgt von einer Gewicht- und Kostenersparnis. Weiterhin wirkt sich dies besonders vorteilig auf die Möglichkeit zur Anbindung von Dämpferaufnahmen, Federn usw. aus. Hier ist insbesondere die Möglichkeit zur Anbindung von Dämpferaufnahmen, Federn oder anderen Anbindungskörpern gegeben, ohne sich negativ auf die Steifigkeit auszuwirken.

Insbesondere wird bei einem erfindungsgemäßen Lenkerarm in einem Mittelabschnitt durch den Bodensteg und die von dem Bodensteg erstreckenden Seitenstege eine Trapezform gebildet. Die Trapezform bewirkt eine breite Aufnahmefläche für etwaige Anbindungsbauteile und erhöht gleichzeitig die Biegesteifigkeit in der Ebene des Bodensteges.

Weiterhin sind besonders bevorzugt bei einem erfindungsgemäßen Lenkerarm die Schenkel und die Seitenstege zumindest in einem Endabschnitt trapezförmig verjüngend ausgebildet. Hierdurch wird an einem Lageranbindungspunkt erreicht, dass nur eine schmale Fläche für die Lageraufnahme zur Verfügung stehen muss. Eine optimierte Bauraumausnutzung bei gleichzeitig optimalem Steifigkeitsverhalten in alle Biegerichtungen wird so mit einem erfindungsgemäßen Lenkerarm sichergestellt.

Weiterhin weisen die Schenkel des Lenkerarms in dem expandierten Abschnitt einen Abstand auf, wobei der Abstand größer ist, als der Abstand des Schenkels in den benachbarten Abschnitten. Auch hierdurch wird wiederum eine Aufweitung des Querschnitts über den Verlauf des Lenkerarms sichergestellt, sodass Anbauteile entsprechend eingebaut werden können.

Weiterhin besonders bevorzugt weisen die Schenkel in dem verjüngten Endabschnitt einen Abstand auf, wobei der Abstand geringer ist als der Abstand des benachbarten Abschnittes. Die Vorteile der Anbindungsmöglichkeit an Lagerpunkte ergeben sich hierbei analog.

Weitere Vorteile, Merkmale, Aspekte und Eigenschaften der vorliegenden Erfindung ergeben sich aus der folgenden Beschreibung. Bevorzugte Ausführungsvarianten sind in den schematischen Figuren dargestellt. Es zeigen:
- Figur 1: ein erfindungsgemäßes Herstellungsverfahren mit den einzelnen Verfahrensschritten,
- Figur 2: einen erfindungsgemäßen Lenkerarm,
- Figur 3: zwei verschiedene erfindungsgemäße Pi-förmige Querschnittsprofile und
- Figur 4: einen erfindungsgemäßen Lenkerarm mit unterschiedlicher Querschnittskonfiguration.

In den Figuren werden für gleiche oder ähnliche Bauteile dieselben Bezugszeichen verwendet, auch wenn eine wiederholte Beschreibung aus Vereinfachungsgründen entfällt.

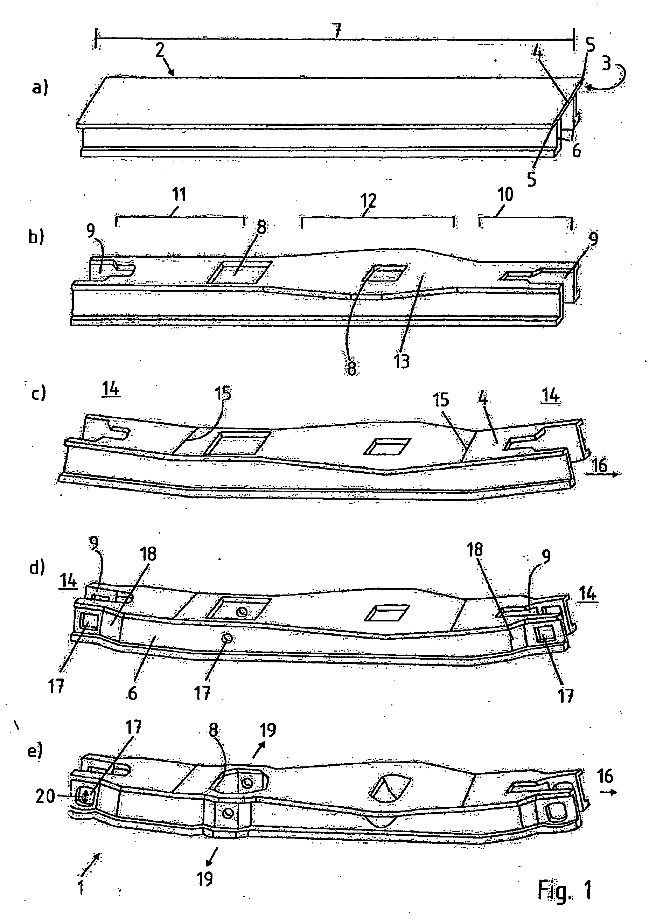

Figur 1 zeigt ein erfindungsgemäßes Herstellungsverfahren für einen Lenkerarm 1. Figur 1 ist untergliedert in die Figuren 1a bis 1e. In Figur 1a ist ein Halbzeug 2 dargestellt, dass eine im Querschnitt Pi-förmige Konfiguration 3 aufweist. Das Halbzeug 2 weist einen Bodensteg 4, sich seitlich von dem Bodensteg in Richtung des Bodensteges 4 erstreckende Seitenstege 5 sowie gegenüber dem Bodensteg 4 abstehende Schenkel 6 auf. Das Halbzeug 2 weist in Längsrichtung eine Länge 7 auf, die im Wesentlichen der Länge des hergestellten Lenkerarmes 1 entspricht.

In Figur 1b ist ein erster Verfahrensschritt ausgeführt worden, wobei der Bodensteg 4 sowie die Seitenstege 5 schneidetechnisch bearbeitet wurden. Besonders bevorzugt erfolgt das schneidetechnische Bearbeiten durch Ausstanzen. Hierbei sind Montageöffnungen 8 und Bearbeitungsöffnungen 9 in den Bodensteg 4 eingebracht. Die Seitenstege 5 sind jeweils in einem vorderen Abschnitt 10 und in einem hinteren Abschnitt 11 abgeschnitten. In einem Mittelabschnitt 12 ist durch den Bodensteg 4 und die Seitenstege 5 eine Trapezform 13 ausgebildet.

Figur 1c zeigt einen weiteren Bearbeitungsschritt, wobei die Endabschnitte 14 des Halbzeuges 2 durch Streckbiegen umgeformt sind. Eine jeweilige Biegeachse 15 verläuft dabei im Wesentlichen quer zur Längsachse 16 des herzustellenden Werkstückes. Die Endabschnitte 14 sind in Richtung zum Bodensteg 4 abgebogen.

Figur 1d zeigt einen weiteren Verfahrensschritt, wobei hier durch einen weiteren Schneide und/oder Stanzprozess Lageraufnahmeöffnungen 17 in die Schenkel 6 eingebracht sind. In einem weiteren parallel zu dem Einbringvorgang der Lageröffnungen ausgeführten Verfahrensschritt werden die Endabschnitte 14 trapezförmig verjüngend ausgebildet. Dies bedeutet, dass die Schenkel 6 der Endabschnitte 14 entsprechend zusammengedrückt werden, sodass sich ein trapezförmiger Übergangsabschnitt 18 zu den Endabschnitten 14 ergibt. Die Bearbeitungsöffnungen 9 sind dabei derart ausgebildet, dass sie die Ausbildung einer trapezförmigen Verjüngung der Endabschnitte 14 entsprechend unformtechnisch erleichtern.

In einem weiteren Verfahrensschritt wird das Querschnittsprofil im Bereich der Montageöffnungen 8 zumindest abschnittsweise aufgeweitet. Die Aufweitung erfolgt dabei in einer Aufweitrichtung 19, wobei die Aufweitrichtung 19 im Wesentlichen quer zur Längsachse 16 des Lenkerarms 1 ausgebildet ist. Dann werden die Lageraufnahmeöffnungen 17 in ihre Endkonfiguration ebenfalls durch Aufweiten umgeformt. Die Aufweitung erfolgt hierbei in eine Lageraufweitvorrichtung 20, wobei die Lageraufweitrichtung 20 ebenfalls im Wesentlichen quer zur Längsachse 16 des Lenkerarmes 1 orientiert ist.

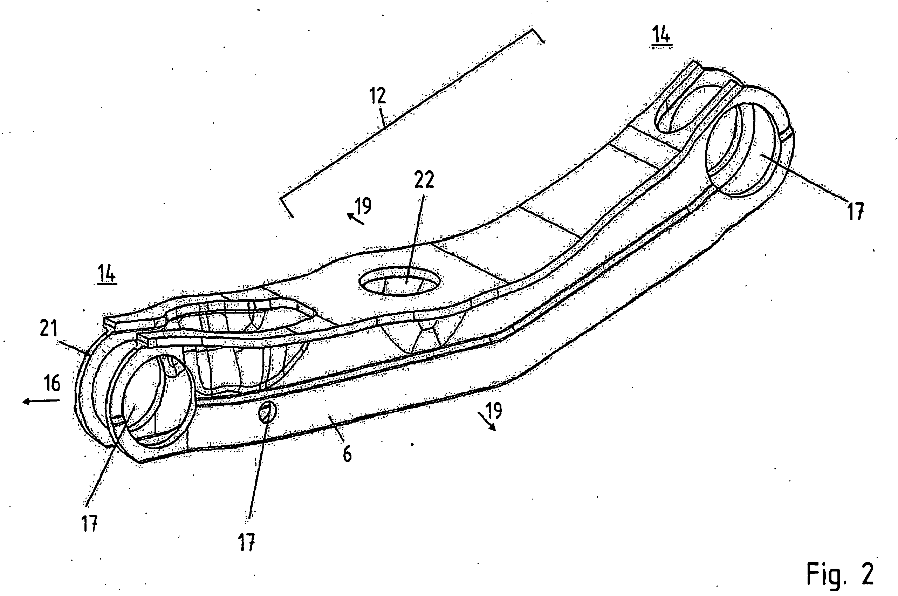

Figur 2 zeigt eine weitere Ausführungsvariante eines erfindungsgemäßen Lenkerarmes 1, der mit einem erfindungsgemäßen Verfahren hergestellt ist. Der Lenkerarm 1 gemäß Figur 2 weist an seinen jeweiligen Endabschnitten 14 abgerundete Schenkel 21 auf. Die Schenkel 6 fassen dabei jeweils eine Lageraufnahmeöffnung 17 ein. Die Lageraufnahmeöffnung 17, hier nicht gezeigt, kann beispielsweise auch Durchzüge aufweisen. In einem Mittelabschnitt 12 weist der erfindungsgemäße Lenkerarm 1 gemäß Figur 2 eine Versteifungsprofilierung 22 auf. Die Versteifungsprofilierung 22 ist dabei in Aufweitrichtung 19, im Wesentlichen quer zur Längsachse 16 im Bereich der Schenkel 6 aufgeweitet. Ebenfalls ist der Lenker im Bereich der auf die Bildebene bezogenen linken Aufnahmeöffnung im Bereich der Schenkel 6 aufgeweitet.

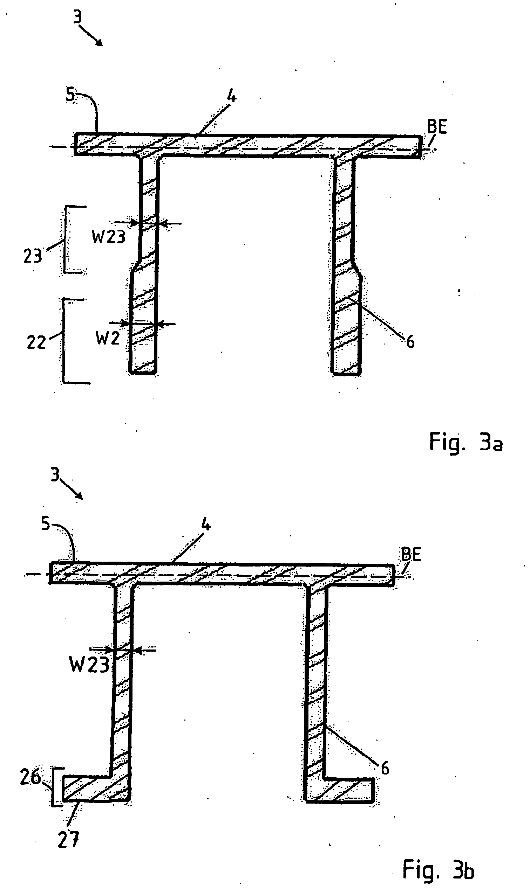

Figur 3a zeigt das erfindungsgemäße Pi-förmige Querschnittsprofil 3 des Halbzeuges. Hierbei ist zu erkennen, dass der Bodensteg 4 sich in Richtung der Bodenstegebene BE erstreckende Seitenstege 5 aufweist. Weiterhin sind gegenüber dem Bodensteg 4 abstehende Schenkel 6 ausgebildet, die in einem unteren Abschnitt 23 eine größere Wandstärke W23 aufweisen, als die Wandstärke W24 in einem oberen Abschnitt 24. Die Schenkel 6 können somit je nach Steifigkeitsanforderung bzw. Festigkeitsanforderung, beispielsweise in Form von hier nicht gezeigten Lageraufnahmeöffnungen im unteren Abschnitt 23 der Schenkel 6 entsprechend ausgelegt sein. Weiterhin zeigt Figur 3b eine Ausführungsvariante eines erfindungsgemäßen im Querschnitt Pi-förmigen Strangpressprofils, wobei die Schenkel 6 eine gleichbleibende Wandstärke über ihren gesamten Verlauf aufweisen und zusätzlich im Fußbereich 26 einen Flansch 27 besitzen.

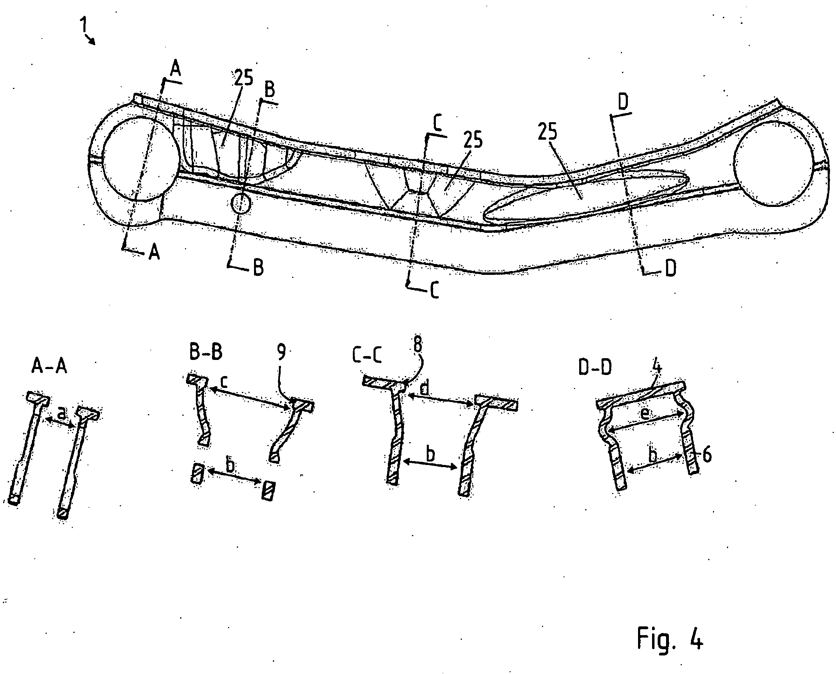

Figur 4 zeigt eine weitere Ausführungsvariante eines erfindungsgemäßen Lenkerarmes 1 mit verschiedenen Querschnittsansichten des Profiles gemäß der Schnittlinien A-A, B-B, C-C und D-D. Gut zu erkennen ist, dass jeweils die Schnittlinien B-B, C-C und D-D einen aufgeweiteten Abschnitt 25 im Bereich der Schenkel 6 aufweisen. Dieser dient insbesondere der Versteifung des erfindungsgemäß hergestellten Lenkerarms 1. Aufgrund der Vorteile des Pi-förmigen Querschnittsprofiles 3 ist es möglich mit einem Aufweitwerkzeug entweder über Richtung des Bodensteges 4, respektiver eine Ausnehmung in Form einer Montageöffnung 8 oder aber einer Bearbeitungsöffnung 9, ein Umformwerkzeug einzuführen und den Bodensteg 4 in diesem Bereich mit aufzuweiten. Im Falle der Schnittlinie D-D ist es möglich, ein Umformwerkzeug durch die nach unten offenstehenden Schenkel 6 einzuführen und somit die Schenkel in diesem Bereich entsprechend einer Versteifung und/oder Verstärkung umzuformen.

Weiterhin ist in Figur 4 der Abstand a in der Schnittlinie A-A eingezeigt, wobei der Abstand a kleiner ist gegenüber einem Abstand b. Der Abstand b entspricht dabei dem ursprünglichen Abstand der Schenkel des Pi-förmigen Querschnittsprofils. Weiterhin weist das Querschnittsprofil in dem aufgeweiteten Abschnitt der Schnittlinie B-B einen oberen Abstand c auf sowie in der Schnittlinie C-C einen oberen Abstand d und in der Schnittlinie D-D einen Abstand e. Die Abstände c, d, e sind dabei immer größer gegenüber dem Abstand b.

### Bezugszeichen:

- 1 -: Lenkerarm
- 2 -: Halbzeug
- 3 -: Pi-förmiger Querschnitt
- 4 -: Bodensteg
- 5 -: Seitensteg
- 6 -: Schenkel
- 7 -: Länge
- 8 -: Montageöffnung
- 9 -: Bearbeitungsöffnung
- 10 -: vorderer Abschnitt
- 11 -: hinterer Abschnitt
- 12 -: Mittelabschnitt
- 13 -: Trapezform
- 14 -: Endabschnitt
- 15 -: Biegeachse
- 16 -: Längsachse
- 17 -: Lageraufnahmeöffnung
- 18 -: trapezförmiger Übergangsabschnitt
- 19 -: Aufweitrichtung
- 20 -: Lageraufweitrichtung
- 21 -: abgerundeter Schenkel
- 22 -: Versteifungsprofillierung
- 23 -: unterer Abschnitt
- 24 -: oberer Abschnitt
- 25 -: aufgeweiteter Abschnitt
- 26 -: Fußbereich
- 27 -: Flansch

- W23 -: Wandstärke unterer Abschnitt
- W24 -: Wandstärke oberer Abschnitt
- BE -: Bodenstegebene

- a -: Abstand
- b -: Abstand
- c -: Abstand
- d -: Abstand
- e -: Abstand

## Patentansprüche

1. Verfahren zur Herstellung eines Lenkerarms (1) zur Anordnung an einer Kraftfahrzeugachse, wobei der Lenkerarm (1) als einstückiges Umformbauteil aus einem Leichtmetallstrangpressprofil hergestellt wird, **gekennzeichnet durch** folgende Verfahrensschritte:
- Bereitstellen eines Halbzeuges (2) aus einem Leichtmetallstrangpressprofil, welches eine Pi-förmige Querschnittskonfiguration (3) mit einem Bodensteg (4) und sich von dem Bodensteg (4) erstreckenden Seitenstegen (5) und gegenüber den Stegen abstehende Schenkeln (6) besitzt,
- Schneidetechnisches Bearbeiten des Halbzeuges (2),
- Einbringen von Lageraufnahmeöffnungen (17),
- Abschnittsweises Aufweiten des Querschnitts des bearbeiteten Halbzeuges (2).

2. Verfahren nach Anspruch 1, **dadurch gekennzeichnet, dass** durch das schneidetechnische Bearbeiten die Seitenstege (5) und/oder Schenkel (6) zumindest abschnittsweise abgeschnitten werden, vorzugsweise durch Stanzen.

3. Verfahren nach Anspruch 1 oder 2, **dadurch gekennzeichnet, dass** mindestens ein Endabschnitt (14) des Halbzeuges (2) umformtechnisch bearbeitet wird.

4. Verfahren nach Anspruch 3, **dadurch gekennzeichnet, dass** mindestens ein Endabschnitt (14) des Halbzeuges (2) zumindest abschnittsweise durch Biegen und/oder Streckbiegen umgeformt wird, vorzugsweise wird der Endabschnitt (14) in Richtung des Bodensteges (4) gebogen.

5. Verfahren nach einem der Ansprüche 1 bis 4, **dadurch gekennzeichnet, dass** die Lageraufnahmeöffnungen (17) durch Stanzen in den Bodensteg (4) und/oder die Schenkel (6) und/oder die Seitenstege (5) eingebracht werden.

6. Verfahren nach einem der Ansprüche 1 bis 5, **dadurch gekennzeichnet, dass** die Lageraufnahmeöffnungen (17) nachbearbeitet werden, vorzugsweise durch umformtechnisches Bearbeiten, insbesondere durch Aufweiten.

7. Verfahren nach einem der Ansprüche 1 bis 6, **dadurch gekennzeichnet, dass** die Schenkel (6) und/oder die Seitenstege (5) zumindest abschnittsweise umgeformt werden, vorzugsweise werden die gegenüberliegenden Schenkel (6) und die Seitenstege (5) in dem Endabschnitt (14) zueinander orientiert umgeformt.

8. Verfahren nach einem der Ansprüche 1 bis 7, **dadurch gekennzeichnet, dass** der Querschnittsverlauf des Halbzeuges (2) durch Aufweiten der Schenkel (6) und/oder Seitenstege (5) zumindest abschnittsweise expandiert werden.

9. Verfahren nach einem der Ansprüche 1 bis 8, **dadurch gekennzeichnet, dass** mit einem Werkzeug zwei Lenkerarme (1) hergestellt werden, die während oder nach der Herstellung getrennt werden.

10. Lenkerarm (1) zur Anordnung an einer Kraftfahrzeugachse, wobei der Lenkerarm (1) aus einem Strangpressprofil hergestellt ist und nach einem Verfahren mit den Merkmalen mindestens einer der Patenansprüche 1 bis 9 hergestellt ist, wobei der Querschnittsverlauf des Lenkerarms (1)
zumindest abschnittsweise aufgeweitet (25) ist, **dadurch gekennzeichnet, dass** der Lenkerarm zumindest abschnittsweise im Querschnitt eine Pi-förmige Konfiguration mit einem Bodensteg (4) und sich in Verlängerung des Bodensteges (4) erstreckenden Seitenstege (5) und gegenüber den Stegen abstehenden Schenkeln (6) aufweist.

11. Lenkerarm nach Anspruch 10, **dadurch gekennzeichnet, dass** der Bodensteg (4) und die Seitenstege (5) in einem Mittelabschnitt (12) eine Trapezform (13) bilden.

12. Lenkerarm nach Anspruch 10 oder 11, **dadurch gekennzeichnet, dass** die Schenkel (6) und die Seitenstege (5) zumindest in einem Endabschnitt (14) trapezförmig verjüngend ausgebildet sind.

13. Lenkerarm nach einem der Ansprüche 10 bis 12, **dadurch gekennzeichnet, dass** die Schenkel (6) in dem expandierten Abschnitt einen Abstand c, d, e aufweisen, wobei der Abstand c, d, e größer ist, als der Abstand b der Schenkel (6) in den benachbarten Abschnitten.

14. Lenkerarm nach einem der Ansprüche 10 bis 13, **dadurch gekennzeichnet, dass** die Schenkel (6) in dem verjüngten Endabschnitt (14) einen Abstand a aufweisen, wobei der Abstand a geringer ist, als der Abstand b des benachbarten Abschnittes.

## Claims

1. Method for manufacturing a control arm (1) for mounting on a motor vehicle axle, the control arm (1) being manufactured as a one-piece formed component from a light-metal extruded profile, **characterised by** the following steps:
- preparing a semi-finished product (2) from a light-metal extruded profile which has a pi-shaped cross-sectional configuration (3) having a bottom web (4) and side webs (5) extending from the bottom web (4) and legs (6) projecting relative to the webs,
- processing the semi-finished product (2) by cutting,
- introducing bearing seat openings (17),
- expanding sections of the cross section of the processed semi-finished product (2).

2. Method according to claim 1, **characterised in that** the side webs (5) and/or legs (6) are cut off, at least in sections, by the cutting process, preferably by punching.

3. Method according to claim 1 or 2, **characterised in that** at least one end section (14) of the semi-finished product (2) is processed by forming.

4. Method according to claim 3, **characterised in that** at least one end section (14) of the semi-finished product (2) is formed by bending and/or stretch-bending, at least in sections, and preferably the end section (14) is bent towards the bottom web (4).

5. Method according to one of claims 1 to 4, **characterised in that** the bearing seat openings (17) are introduced into the bottom web (4) and/or the legs (6) and/or the side webs (5) by punching.

6. Method according to one of claims 1 to 5, **characterised in that** the bearing seat openings (17) are post-processed, preferably by forming, particularly by expansion.

7. Method according to one of claims 1 to 6, **characterised in that** the legs (6) and/or the side webs (5) are formed at least in sections, preferably the opposing legs (6) and the side webs (5) in the end section (14) are formed so as to be oriented towards each other.

8. Method according to one of claims 1 to 7, **characterised in that** the cross-sectional profile of the semi-finished product (2) is expanded at least in sections by expanding the legs (6) and/or the side webs (5).

9. Method according to one of claims 1 to 8, **characterised in that** two control arms (1) are produced with one tool and separated during or after manufacture.

10. Control arm (1) for mounting on a motor vehicle axle, wherein the control arm (1) is produced from an extruded profile and in particular according to a process having the features of at least one of claims 1 to 9, wherein the cross-sectional profile of the control arm (1) is expanded (25) at least in sections, **characterised in that** the control arm comprises at least in sections a pi-shaped cross-sectional configuration having a bottom web (4) and side webs (5) extending as an extension of the bottom web (4), and legs (6) projecting relative to the side webs.

11. Control arm according to claim 10, **characterised in that** the bottom web (4) and the side webs (5) form a trapezoidal shape (13) in a centre section (12).

12. Control arm according to claim 10 or 11, **characterised in that** the legs (6) and the side webs (5) are configured to taper trapezoidally at least in an end section (14).

13. Control arm according to one of claims 10 to 12, **characterised in that** the legs (6) in the expanded section are at a spacing c, d, e, the spacing c, d, e being greater than the spacing b of the legs (6) in the adjacent sections.

14. Control arm according to one of claims 10 to 13, **characterised in that** the legs (6) in the tapered end section (14) are at a spacing a, the spacing a being smaller than the spacing b of the adjacent section.

## Revendications

1. Procédé de fabrication d'un bras de suspension (1) pour aménagement sur un essieu de véhicule automobile, dans lequel le bras de suspension (1) est fabriqué sous la forme d'une pièce façonnée d'un seul tenant en profilé extrudé de métal léger, **caractérisé par** les étapes suivantes consistant à :
- préparer un produit semi-fini (2) à partir d'un profilé extrudé en métal léger, qui possède une configuration en coupe transversale en forme de π (3) avec une barrette de base (4) et des barrettes latérales (5) s'étendant de la barrette de base (4) et des branches (6) s'écartant des barrettes,
- usiner le produit semi-fini (2) par une technique de coupe,
- ménager des ouvertures (17) pour y recevoir des paliers, et
- évaser par sections la section transversale du produit semi-fini usiné (2).

2. Procédé selon la revendication 1, **caractérisé en ce que** les barrettes latérales (5) et/ou les branches (6) sont découpées au moins par sections, de préférence par estampage, au cours de l'usinage par technique de coupe.

3. Procédé selon la revendication 1 ou la revendication 2, **caractérisé en ce qu'**au moins une section d'extrémité (14) du produit semi-fini (2) est usinée par une technique de façonnage.

4. Procédé selon la revendication 3, **caractérisé en ce qu'**au moins une section d'extrémité (14) du produit semi-fini (2) est façonnée au moins par sections par pliage et/ou par traction et pliage, de préférence la section d'extrémité (14) est repliée dans la direction de la barrette de base (4).

5. Procédé selon l'une quelconque des revendications 1 à 4, **caractérisé en ce que** les ouvertures (17) pour la réception de paliers sont ménagées par estampage dans la barrette de base (4) et/ou dans les branches (6) et/ou dans les barrettes latérales (5).

6. Procédé selon l'une quelconque des revendications 1 à 5, **caractérisé en ce que** les ouvertures (17) pour la réception de paliers sont finies, de préférence par usinage par une technique de façonnage, en particulier par évasement.

7. Procédé selon l'une quelconque des revendications 1 à 6, **caractérisé en ce que** les branches (6) et/ou les barrettes latérales (5) sont façonnées au moins par sections, de préférence les branches opposées (6) et/ou les barrettes latérales (5) sont façonnées orientés l'une vers l'autre dans la section d'extrémité (14).

8. Procédé selon l'une quelconque des revendications 1 à 7, **caractérisé en ce que** les profils en coupe transversale du produit semi-fini (2) sont amplifiés au moins par sections par évasement des branches (6) et/ou des barrettes latérales (5).

9. Procédé selon l'une quelconque des revendications 1 à 8, **caractérisé en ce que** l'on fabrique avec un outil deux bras de suspension (1) qui sont séparés pendant ou après la fabrication.

10. Bras de suspension (1) pour aménagement sur un essieu de véhicule automobile, dans lequel le bras de suspension (1) est fabriqué en profilé extrudé et est en particulier élaboré selon un procédé ayant les caractéristiques d'au moins l'une des revendications 1 à 9, dans lequel le profil en section transversale du bras de suspension (1) est évasé (25) au moins par sections, **caractérisé en ce que** le bras de suspension présente au moins par sections une configuration en coupe transversale en forme de π avec une barrette de base (4) et des barrettes latérales (5) s'étendant dans le prolongement de la barrette de base (4) et des branches (6) s'écartant des barrettes.

11. Bras de suspension selon la revendication 10, **caractérisé en ce que** la barrette de base (4) et les barrettes latérales (5) forment un profil trapézoïdal (13) dans une section médiane (12).

12. Bras de suspension selon la revendication 10 ou la revendication 11, **caractérisé en ce que** les branches (6) et les barrettes latérales (5) sont conformées en manière à s'amincir en forme de trapèze au moins dans une section d'extrémité (14).

13. Bras de suspension selon l'une quelconque des revendications 10 à 12, **caractérisé en ce que** les branches (6) présentent dans la section amplifiée une distance c, d, e, dans lequel la distance c, d, e, est plus grande que la distance b des branches (6) dans les sections voisines.

14. Bras de suspension selon l'une quelconque des revendications 10 à 13, **caractérisé en ce que** les branches (6) présentent dans la section d'extrémité amincie (14) une distance a, dans lequel la distance a est plus petite que la distance b de la section voisine.
